# EUROPÄISCHE PATENTSCHRIFT

(11) **EP 0 551 371 B1**
(45) Veröffentlichungstag und Bekanntmachung des Hinweises auf die Patenterteilung: **04.01.1995**
(21) Anmeldenummer: 91917791.5
(22) Anmeldetag: 10.10.1991
(51) Int. Cl.: B62D 5/32

(54) **HYDROSTATISCHE LENKEINRICHTUNG MIT HYDRAULISCHER HILFSKRAFTUNTERSTÜTZUNG FÜR KRAFTFAHRZEUGE**
HYDROSTATIC STEERING DEVICE WITH HYDRAULIC POWER ASSISTANCE FOR MOTOR VEHICLES
DISPOSITIF HYDROSTATIQUE DE DIRECTION A ASSISTANCE HYDRAULIQUE POUR VEHICULES A MOTEUR

(30) Priorität: 13.10.1990 DE 4032553
(43) Veröffentlichungstag der Anmeldung: 21.07.1993
(73) Patentinhaber: ZAHNRADFABRIK FRIEDRICHSHAFEN AG, 88015 Friedrichshafen (DE)
(72) Erfinder: TISCHER, Werner, D-7072 Lautern (DE)
(74) Vertreter: Raue, Reimund
(86) Internationale Anmeldenummer: EP9101926
(87) Internationale Veröffentlichungsnummer: WO9206880

(56) Entgegenhaltungen:
- DE-A- 2 322 998
- DE-A- 2 409 207
- US-A- 2 954 671
- US-A- 4 102 129
- US-A- 4 749 055

## Beschreibung

Die Erfindung betrifft eine Lenkeinrichtung mit hydraulischer Hilfskraftunterstützung für Kraftfahrzeuge nach dem Oberbegriff des Anspruches 1. Die Lenkeinrichtung enthält zwei Lenkkreise, von denen jeder eine Servopumpe einen Druckmittelbehälter, ein Steuerventil und einen Servomotor aufweist. Beide Lenkkreise werden gemeinsam von einem Lenkhandrad gesteuert. Der eine Lenkkreis weist eine über ein Lenkhandrad betätigbare Steuereinrichtung auf, die eine Steuerpumpe und eines der Steuerventile enthält. Der zweite Lenkkreis wirkt in Abhängigkeit von dem ersten Lenkkreis zusammen mit diesem oder allein.

Eine derartige hydrostatische Lenkeinrichtung ist bekannt aus der DE-C3-24 09 207. Diese Lenkeinrichtung, die einen steuerbaren Servomotor und einen zuschaltbaren Servomotor enthält, die jeweils in getrennten Lenkkreisen mit Drucköl versorgt werden, ist zugelassen für Fahrzeuge mit einer bauartbedingten Höchstgeschwindigkeit von 62 km/h. Für Fahrzeuggeschwindigkeiten, die über dieser Grenze liegen, muß eine mechanische Verbindung zwischen dem Lenkhandrad und den zu lenkenden Fahrzeugrädern bestehen. Nach neuen gesetzlichen Vorschriften kann diese mechanische Verbindung entfallen, wenn zwei getrennte Lenkkraftkreise vorhanden sind. Diese dürfen sich jedoch nicht gegenseitig ausschalten oder blockieren. Unter "Blockieren" ist beispielsweise ein hydraulisches Verriegeln der beiden Lenkkreise gegeneinander zu verstehen. Ein solches hydraulisches Verriegeln kann beispielsweise dann auftreten, wenn durch Lecköl in einem Druckraum eines Servomotors ein Druck aufgebaut wird, der in bestimmten Stellungen des zugehörigen Steuerventils nicht abgebaut werden kann. Das Fahrzeug muß aber mit beiden Lenkkreisen gemeinsam und mit jedem einzelnen von ihnen lenkbar sein.

Bei einer anderen bekannten hydrostatischen Lenkeinrichtung mit zwei Lenkkreisen werden zum mechanischen und hydraulischen Abgleich zwei Steuereinheiten und zwei Sperrventile verwendet (DE-B2-23 22 998). Die beiden Lenkkreise sind nur hydraulisch angesteuert und sind nicht beide synchronisiert. Beim Ausfall des einen synchronisierten Lenkkreises kann der zweite Lenkkreis nicht mehr angesteuert werden. Diese Lenkeinrichtung ist deshalb relativ aufwendig, teuer und unsicher.

Der Erfindung liegt die Aufgabe zugrunde, eine hydrostatische Lenkeinrichtung der eingangs genannten Art derart auszugestalten, daß mit einem geringen Aufwand an zusätzlich erforderlichen Aggregaten die Lenkbarkeit des Fahrzeuges sowohl mit beiden Lenkkreisen als auch - bei Ausfall eines Lenkkreises - mit nur einem Lenkkreis mit Sicherheit gewährleistet ist.

Diese Aufgabe wird durch die im Anspruch 1 gekennzeichnete hydrostatische Lenkeinrichtung gelöst. Weitere zweckmäßige und vorteilhafte Ausgestaltungen der Erfindung sind in den Unteransprüchen angegeben. Dazu wird das Steuerventil des zweiten Lenkkreises durch eine Elektronikeinheit in Abhängigkeit von wenigstens einer Kenngröße des ersten Lenkkreises gesteuert. Besonders vorteilhaft ist es dabei, wenn der zweite Lenkkreis dem ersten Lenkkreis um einen geringen Betrag nacheilt. Dann wird ein hydraulisches Verriegeln der beiden Lenkkreise verhindert.

Die Kenngröße zur Steuerung des Steuerventils des zweiten Lenkkreises ist zweckmäßigerweise ein von einem Lenkwegsensor erzeugtes Lenkwegsignal des Lenkhandrades. Dabei kann der Weg entweder eine Linearbewegung in Achsrichtung der Lenkspindel sein oder direkt als Verdrehwinkel des Lenkhandrades gemessen werden. Dieses Lenkwegsignal wird mit einem Signal eines Wegsensors, der an dem Servomotor des zweiten Lenkkreises angeordnet ist, verglichen. Diese Werte werden in der Elektronikeinheit aufbereitet und dem Steuerventil des zweiten Lenkkreises zugeführt.

In beiden Lenkkreisen ist je ein Pegelwächter angeordnet, der das Druckmittelniveau in den Druckmittelbehältern anzeigt. Außerdem ist in jeder Pumpendruckleitung ein Durchflußanzeiger eingebaut. Dadurch wird der Fahrer bei einem Druckmittelverlust vorgewarnt, lange bevor der Druckmittelbehälter leer ist. Außerdem können beide Lenkkreise getrennt überwacht werden.

Das Drehmomentsignal des Drehmomentsensors kann zusätzlich als Sicherheitskenngröße verwendet werden, indem beispielsweise oberhalb einer bestimmten zulässigen Kraftschwelle der zweite Lenkkreis abgeschaltet wird. Das Überschreiten der Kraftschwelle zeigt an, daß Teile der Steuerung, der Elektronik oder der Wegsensorik nicht ordnungsgemäß arbeiten. Auch durch diesen Sicherheitsalgorithmus wird ein Gegeneinanderwirken der zwei Lenkkreise verhindert.

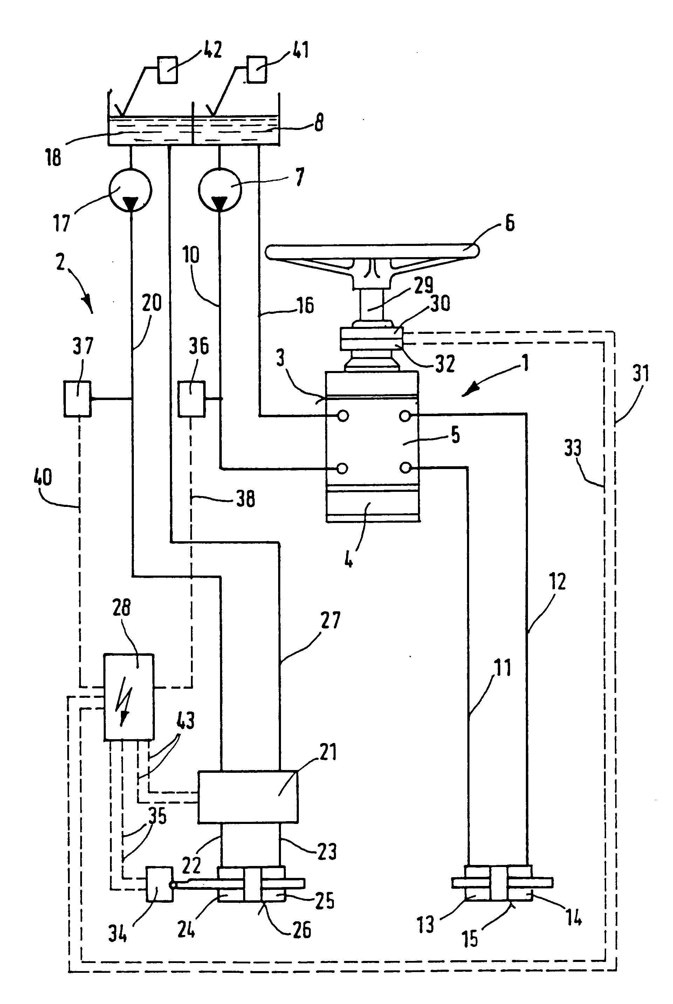

Im folgenden wird die Erfindung anhand eines in der Zeichnung dargestellten Ausführungsbeispieles näher erläutert. Die Zeichnung zeigt den schematischen Aufbau der erfindungsgemäßen hydrostatischen Lenkeinrichtung.

Die hydrostatische Lenkeinrichtung besteht im wesentlichen aus zwei Lenkkreisen 1 und 2. Der erste Lenkkreis 1 enthält eine Steuereinrichtung 3 mit einer Steuerpumpe 4 und einem Steuerventil 5, die beide über ein Lenkhandrad 6 betätigbar sind. Eine Servopumpe 7 fördert aus einem Druckmittelbehälter 8 Druckmittel über eine Pumpendruckleitung 10 zu der Steuereinrichtung 3. Von dort wird das Druckmittel wechselweise über je eine Arbeitsleitung 11 bzw. 12 den beiden Druckräumen 13 bzw. 14 eines Servomotors 15 zugeführt. Eine Rücklaufleitung 16 führt von der Steuereinrichtung 3 zu dem Druckmittelbehälter 8.

In dem zweiten Lenkkreis 2 fördert eine Servopumpe 17 aus einem Druckmittelbehälter 18 über eine Pumpendruckleitung 20 Druckmittel zu einem Steuerventil 21, das als Proportional-Magnetventil ausgeführt ist. Das Druckmittel wird in dem Lenkkreis 2 wechselweise über zwei Arbeitsleitungen 22 bzw. 23 den beiden Druckräumen 24 bzw. 25 eines Servomotors 26 zugeleitet. Von dem Steuerventil 21 führt eine Rücklaufleitung 27 zu dem Druckmittelbehälter 18.

Zur Steuerung des zweiten Lenkkreises 2 dient eine Elektronikeinheit 28, die folgende Signale empfängt, verarbeitet und weiterleitet: Zwischen dem Lenkhandrad 6 und der Steuereinrichtung 3 ist an einer Lenksäule 29 ein Lenkwegsensor 30 angeordnet, der ein Lenkwegsignal erzeugt, das über eine Signalleitung 31 der Elektronikeinheit 28 zugeführt wird. Der Lenkwegsensor 30 ist zweckmäßigerweise als Lenkwinkelsensor ausgebildet, er kann jedoch auch auf eine geradlinige Axialbewegung ansprechen. Zum Leckölausgleich muß der Lenkwinkelsensor ein nicht begrenztes, digitales Signal abgeben. Ein solches Signal ist auch erforderlich, um ein hydraulisches Verriegeln zu verhindern. An der gleichen Stelle wie der Lenkwegsensor 30 ist ein Momentensensor 32 angeordnet, dessen Momentensignal über eine Signalleitung 33 der Elektronikeinheit 28 zugeführt wird. Das Momentensignal steuert dabei den Druck proportional. An dem Servomotor 26 des zweiten Lenkkreises 2 ist ein Wegsensor 34 angeordnet, dessen Wegsignale über eine Signalleitung 35 der Elektronikeinheit 28 zugeführt werden.

Zur Überwachung der beiden Lenkkreise 1 und 2 ist in jeder Pumpendruckleitung 10 und 20 ein Durchflußanzeiger 36 bzw. 37 eingebaut, die beide über Signalleitungen 38 bzw. 40 mit der Elektronikeinheit 28 verbunden sind. Zur Anzeige des Druckmittelniveaus in den beiden Druckmittelbehältern 8 und 18 dienen zwei Pegelwächter 41 und 42.

Im folgenden wird die Funktion der hydrostatischen Lenkeinrichtung beschrieben: Durch Drehen des Lenkhandrades 6 wird das von der Servopumpe 7 geförderte Druckmittel über die Steuereinrichtung 3 dem Servomotor 15 zugesteuert. Der Lenkwegsensor 30 erzeugt abhängig von der Größe der Auslenkung des Lenkhandrades 6 ein Lenkwegsignal, das in der Elektronikeinheit 28 verarbeitet und über Signalleitungen 43 dem Steuerventil 21 zugeführt wird. Dadurch wird das Steuerventil 21 entsprechend verstellt, so daß der Servomotor 26 des zweiten Lenkkreises 2 synchron zu dem Servomotor 15 des ersten Lenkkreises 1 verstellt wird. Der Wegsensor 34 gibt über die Signalleitung 35 die Rückmeldesignale an die Elektronikeinheit 28.

| Bezugszeichen | | | |
|---|---|---|---|
| 1 | Lenkkreis | 34 | Wegsensor |
| 2 | Lenkkreis | 35 | Signalleitung |
| 3 | Steuereinrichtung | 36 | Durchflußanzeiger |
| 4 | Steuerpumpe | 37 | Durchflußanzeiger |
| 5 | Steuerventil | 38 | Signalleitung |
| 6 | Lenkhandrad | 39 | - |
| 7 | Servopumpe | 40 | Signalleitung |
| 8 | Druckmittelbehälter | 41 | Pegelwächter |
| 9 | - | 42 | Pegelwächter |
| 10 | Pumpendruckleitung | 43 | Signalleitung |
| 11 | Arbeitsleitung | | |
| 12 | Arbeitsleitung | | |
| 13 | Druckraum | | |
| 14 | Druckraum | | |
| 15 | Servomotor | | |
| 16 | Rücklaufleitung | | |
| 17 | Servopumpe | | |
| 18 | Druckmittelbehälter | | |
| 19 | - | | |
| 20 | Pumpendruckleitung | | |
| 21 | Steuerventil | | |
| 22 | Arbeitsleitung | | |
| 23 | Arbeitsleitung | | |
| 24 | Druckraum | | |
| 25 | Druckraum | | |
| 26 | Servomotor | | |
| 27 | Rücklaufleitung | | |
| 28 | Elektronikeinheit | | |
| 29 | Lenksäule | | |
| 30 | Lenkwegsensor | | |
| 31 | Signalleitung | | |
| 32 | Momentensensor | | |
| 33 | Signalleitung | | |

## Patentansprüche

1. Hydrostatische Lenkeinrichtung mit hydraulischer Hilfskraftunterstützung für Kraftfahrzeuge, mit zwei Lenkkreisen (1, 2), von denen jeder eine Servopumpe (7, 17) aufweist, die aus je einem Druckmittelbehälter (8, 18) gefördertes Druckmittel über je ein Steuerventil (5, 21) je einem Servomotor (15, 26) zusteuert, wobei der erste Lenkkreis (1) eine über ein Lenkhandrad (6) betätigbare Steuereinrichtung (3) aufweist, die eine Steuerpumpe (4) und eines der Steuerventile (5) enthält und wobei der zweite Lenkkreis (2) in Abhängigkeit von dem ersten Lenkkreis (1) steuerbar ist, dadurch **gekennzeichnet,** daß das Steuerventil (21) des zweiten Lenkkreises (2) durch eine Elektronikeinheit (28) in Abhängigkeit von wenigstens einer Kenngröße des ersten Lenkkreises (1) gesteuert wird.

2. Hydrostatische Lenkeinrichtung nach Anspruch 1, dadurch **gekennzeichnet,** daß das Steuerventil (21) des zweiten Lenkkreises (2) derart gesteuert wird, daß der zweite Lenkkreis (2) dem ersten Lenkkreis (1) wenigstens um einen geringen Betrag nacheilt.

3. Hydrostatische Lenkeinrichtung nach Anspruch 1, dadurch **gekennzeichnet,** daß die Kenngröße ein von einem Lenkwegsensor (30) erzeugtes Lenkwegsignal des Lenkhandrades (6) ist.

4. Hydrostatische Lenkeinrichtung nach Anspruch 3, dadurch **gekennzeichnet,** daß der Lenkwegsensor (30) als Lenkwinkelsensor an einer zwischen dem Lenkhandrad (6) und der Steuereinrichtung (3) liegenden Lenksäule (29) angeordnet ist.

5. Hydrostatische Lenkeinrichtung nach Anspruch 1, dadurch **gekennzeichnet,** daß die Kenngröße ein voll einem Momentensensor (32) erzeugtes Drehmomentsignal ist, wobei der Momentensensor (32) an der Lenksäule (29) angeordnet ist.

6. Hydrostatische Lenkeinrichtung nach Anspruch 1, dadurch **gekennzeichnet,** daß das Steuerventil (21) des zweiten Lenkkreises (2) ein Proportionalventil ist.

7. Hydrostatische Lenkeinrichtung nach Anspruch 1, dadurch **gekennzeichnet,** daß in beiden Lenkkreisen (1, 2) je ein das Druckmittelniveau in den Druckmittelbehältern (8, 18) anzeigender Pegelwächter (41, 42) und je ein in einer Pumpendruckleitung (10, 20) angeordneter Durchflußanzeiger (36, 37) eingebaut ist.

8. Hydrostatische Lenkeinrichtung nach Anspruch 5, dadurch **gekennzeichnet,** daß das Momentensignal des Momentensensors (32) zur Steuerung des Druckes des Steuerventils (21) des zweiten Kreises (2) benutzt wird.

9. Hydrostatische Lenkeinrichtung nach Anspruch 4, dadurch **gekennzeichnet,** daß der Lenkwinkelsensor ein nicht begrenztes, digitales Signal abgibt.

## Claims

1. A hydrostatic steering device with hydraulic power assistance for motor vehicles, with two steering circuits (1, 2) each comprising a servo pump (7, 17), each of which directs pressure medium from a pressure medium container (8, 18) via each control valve (5, 21) to each servo motor (15, 26), the first steering circuit (1) comprising a control device (3) which is actuatable by means of a steering wheel (6), said control device (3) containing a control pump (4) and one of the control valves (5) and the second steering circuit (2) is controllable in dependence on the first steering circuit (1), characterized in that the control valve (21) of the second steering circuit (2) is controlled by an electronic unit (28) in dependence on at least one characteristic of the first steering circuit (1).

2. A hydrostatic steering device according to claim 1, characterized in that the control valve (21) of the second steering circuit (2) is controlled such that the second steering circuit (2) runs behind the first steering circuit (1) at least by a small amount.

3. A hydrostatic steering device according to claim 1, characterized in that the characteristic is a steering travel signal from steering wheel (6), generated by a steering travel sensor (30).

4. A hydrostatic steering device according to claim 3, characterized in that the steering travel sensor (30) is disposed as a steering angle sensor on a steering column (29) which lies between the steering wheel (6) and the control device (3).

5. A hydrostatic steering device according to claim 1, characterized in that the characteristic is a torque signal generated by a torque sensor (32), the torque sensor (32) being disposed at the steering column (29).

6. A hydrostatic steering device according to claim 1, characterized in that the control valve (21) of the second steering circuit (2) is a proportional valve.

7. A hydrostatic steering device according to claim 1, characterized in that in each of the two steering circuits (1, 2), there is incorporated a level monitor (41, 42), which shows the pressure medium level in the pressure medium containers (8, 18) and a flow rate indicator (36, 37), disposed in a pump pressure pipe (10, 20).

8. A hydrostatic steering device according to claim 5, characterized in that the torque signal of the torque sensor (32) is used to control the pressure of the control valve (21) of the second circuit (2)

9. A hydrostatic steering device according to claim 4, characterized in that the steering angle sensor emits a non-limited, digital signal.

## Revendications

1. Dispositif hydrostatique de direction à assistance hydraulique pour véhicules à moteur, pourvu de deux circuits de direction (1, 2) qui comportent chacun une servopompe (7, 17) qui envoie du fluide de pression d'un réservoir respectif (8, 18) à un servomoteur respectif (15, 26) via une soupape de commande respective (5, 21), où le premier circuit de direction (1) comporte un dispositif de commande (3) actionné par un volant de direction (6) et comprenant une pompe de commande (4) et l'une des soupapes de commande (5) et où le second circuit de direction (2) est commandé en fonction du premier circuit (1), **caractérisé** en ce que la soupape de commande (21) du second circuit (2) est commandée au moyen d'une unité électronique (28) en fonction d'au moins une grandeur caractéristique du premier circuit (1).

2. Dispositif hydrostatique de direction selon la revendication 1, **caractérisé** en ce que la soupape de commande (21) du second circuit (2) est commandée de telle manière que le second circuit (2) est en retard, au moins dans une faible mesure, par rapport au premier circuit (1).

3. Dispositif hydrostatique de direction selon la revendication 1, **caractérisé** en ce que la grandeur caractéristique est un signal de course de braquage du volant (6), délivré par un capteur (30) de course de la direction.

4. Dispositif hydrostatique de direction selon la revendication 3, **caractérisé** en ce que ledit capteur (30) est un capteur d'angle disposé sur une colonne de direction (29) située entre le volant (6) et le dispositif de commande (3).

5. Dispositif hydrostatique de direction selon la revendication 1, **caractérisé** en ce que la grandeur caractéristique est un signal de couple délivré par un capteur de couple (32) disposé sur la colonne de direction (29).

6. Dispositif hydrostatique de direction selon la revendication 1, **caractérisé** en ce que la soupape de commande (21) du second circuit (2) est une soupape proportionnelle.

7. Dispositif hydrostatique de direction selon la revendication 1, **caractérisé** en ce que chacun des deux circuits (1, 2) comporte un contrôleur de niveau (41, 42), indiquant le niveau du fluide dans le réservoir (8, 18), et un indicateur de débit (36, 37) disposé sur un conduit (10, 20) de refoulement de la pompe.

8. Dispositif hydrostatique de direction selon la revendication 5, **caractérisé** en ce que le signal de couple du capteur de couple (32) est utilisé pour commander la pression de la soupape de commande (21) du second circuit (2).

9. Dispositif hydrostatique de direction selon la revendication 4, **caractérisé** en ce que le capteur d'angle délivre un signal numérique non limité.
